# EUROPEAN PATENT APPLICATION

(11) **EP 3 272 644 A1**
(43) Date of publication of application: **24.01.2018**
(21) Application number: 16382355.2
(22) Date of filing: 21.07.2016
(51) Int. Cl.: B64C 1/14

(54) **MAGNETIC UNION OF ACCESS PANELS AND FAIRINGS OF AIRCRAFT TO ITS RESISTANT STRUCTURE**

(71) Applicant: Airbus Operations, S.L., 28906 Getafe Madrid (ES)
(72) Inventor: ARANA HIDALGO, Alberto, 28906 Getafe (ES)
(74) Representative: Elzaburu S.L.P.

(57) **Abstract**

The invention provides a union arrangement between a non-structural panel (21) of the outer surface of an aircraft and a supporting member (30) belonging to the aircraft resistant structure using mechanical and magnetic means as attachment means. The magnetic means comprise permanent magnets (31, 41) located whether in the non-structural panel (21) or in the supporting member (30) and cooperating means (33, 43) with them located whether in the supporting member (30) or in the non-structural panel (21). The magnetic means are used for both facilitating the self-clamping of the non-structural panel (21) to the supporting member (30) during the union operation and serving as fastening means together with mechanical means such as bolts (35) installed in holes (23).

## Description

### FIELD OF THE INVENTION

The present invention relates to the union arrangement of non-structural panels of aircraft to its resistant structure and, more particularly, to the union arrangement of access panels to the aircraft inside and fairing panels.

### BACKGROUND

The most common means for joining access panels or fairing panels to the aircraft resistant structure is a set of bolted joins (permanent or removable) arranged around the edge of the panel.

Other joining means such as the double door clamping with seal requirements which is used for a manhole door in a fuel tank area are also known.

Depending on the size of said panels the number of fasteners can be large. The location and drilling of the corresponding holes and the installation of the fasteners involves a complex and expensive process for both aircraft assembly plants and airlines maintenance workshops since it requires the assistance of several operators or special means (jigs and tools) to keep the panel properly positioned while carrying out the joining process to the resistant structure of the aircraft by installing all necessary fasteners.

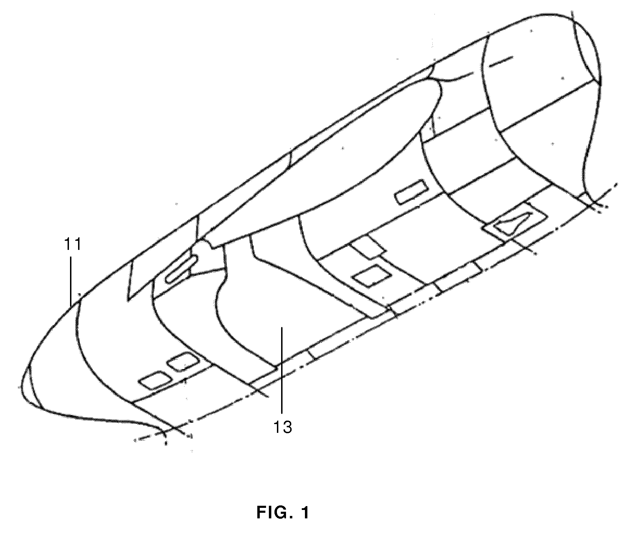

In the case in particular of the union of belly fairing panels such as panels 11, 13 of Figure 1, their big size and their position in the bottom of the aircraft imply that the fastening process to the aircraft resistant structure using conventional means is especially costly.

The present invention is directed to solving that drawback.

### SUMMARY OF THE INVENTION

In one aspect, the invention provides a union arrangement between a non-structural panel of the outer surface of an aircraft and a supporting member belonging to the aircraft resistant structure by mechanical and magnetic attachment means. The magnetic means are used for both facilitating the self-clamping of the non-structural panel to the supporting member during the union operation and serving as fastening means together with the mechanical means (preferably bolts installed in holes).

These magnetic attachment means comprise permanent magnets (preferably made of neodymium) arranged whether in said non-structural panel or in the supporting member and cooperating means with them in, respectively, the supporting member or the non-structural panel.

In one embodiment the non-structural panel is made of composite and said cooperating means is the supporting member itself if it is made of a suitable metallic material or, otherwise, a part made of a ferromagnetic material arranged inside it.

In one embodiment the permanent magnets are arranged in the non-structural panel or in the supporting member in a manner so that they have a surface of contact with, respectively the supporting member or the non-structural panel.

In one embodiment the permanent magnets and the cooperating means with them are configured as removable plug-type connectors that can be installed in the holes of the non-structural panel and the supporting member.

In one embodiment the magnetic attachment means are configured to allow by themselves alone the self-attachment of the non-structural panel to the supporting member.

In another aspect, the invention provides a method of making a union arrangement between a non-structural panel of the outer surface of an aircraft and a supporting member belonging to the aircraft resistant structure comprising a first step wherein a union arrangement is made in a subset of holes using only removable magnetic means and a second step wherein the union arrangement is made using only mechanical means.

In another aspect, the invention provides an aircraft comprising any of the above-mentioned union arrangements between a non-structural panel of its outer surface and a supporting member belonging to its resistant structure.

Other characteristics and advantages of the present invention will be clear from the following detailed description of embodiments illustrative of its object in relation to the attached drawings.

### BRIEF DESCRIPTION OF THE DRAWINGS

Figure 1 is a perspective view of a ventral fairing of an aircraft that includes panels for which the union arrangement to the aircraft resistant structure of the invention is particularly advantageous.
Figure 2a is a schematic view of a non-structural panel arranged to be joined to the resistant structure of an aircraft with mechanical attachment means in a manner known in the art and
Figure 2b is a schematic sectional view of the union of two non-structural panels to a supporting member of the aircraft resistant structure.
Figure 3a is a schematic view of a non-structural panel arranged to be joined to the resistant structure of an aircraft with a combination of mechanical and magnetic attachment means according to an embodiment of the invention and Figure 3b is a schematic sectional view of the union of the non-structural panel to a supporting member of the aircraft resistant structure.
Figures 4a, 5a are schematic views of a non-structural panel arranged to be joined to the resistant structure of an aircraft in two steps with a combination of mechanical and magnetic attachment means according to another embodiment of the invention and Figures 4b, 5b are schematic sectional views of the union of the non-structural panel to a supporting member of the aircraft resistant structure in said two steps.

### DETAILED DESCRIPTION OF THE INVENTION

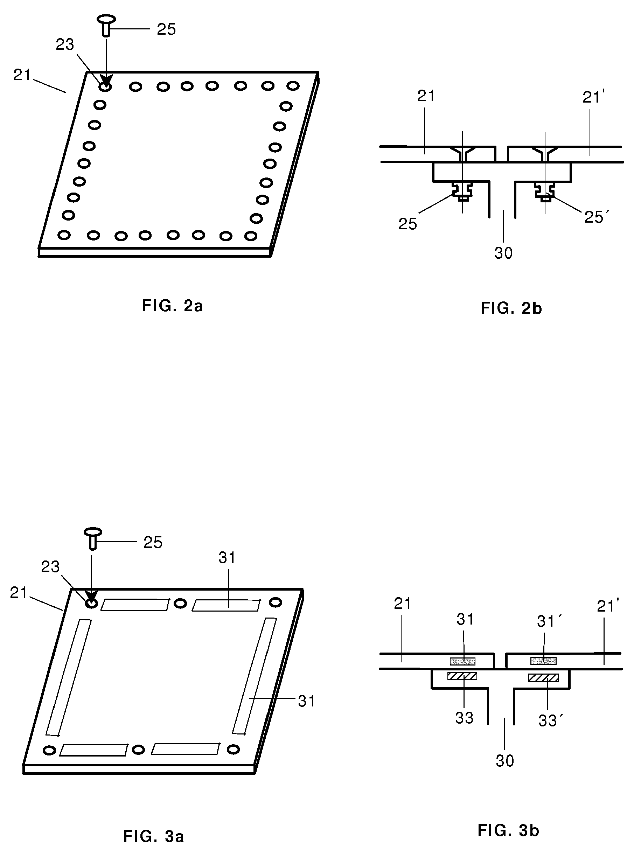

A typical bolted join of two non-structural panels 21, 21' to a supporting member 30 belonging to the aircraft resistant structure (see Figures 2a and 2b) requires making a large number of holes 23 in the non-structural panels 21, 21' and in the supporting member 30 and then installing the bolts 25, 25' which, as noted above, requires a costly process particularly in the case of panels belonging to the bottom surface of the aircraft.

In the embodiment of the invention illustrated in Figures 3a and 3b, the union of the non-structural panels 21, 21' to the supporting member 30 combines the use of bolts 25, 25', in a much smaller number than in the case of the bolted joints known in the art, with the use of magnetic attachment means comprising permanent magnets 31, 31' arranged along the contour of non-structural panels 21, 21' and cooperating ferromagnetic parts 33, 33' arranged in the supporting member 30, except that this is made with a suitable metallic material and therefore can cooperate directly with the permanent magnets 31, 31'.

Preferably the non-structural panels 21, 21' are made of composite material.

Preferably the permanent magnets 31, 31' are embedded within the non-structural panels 21, 21', made of composite material, as shown in Figure 3b and arranged with a face aligned with the outer surface of the non-structural panels 21, 21' so that they can come into direct contact with the supporting member 30.

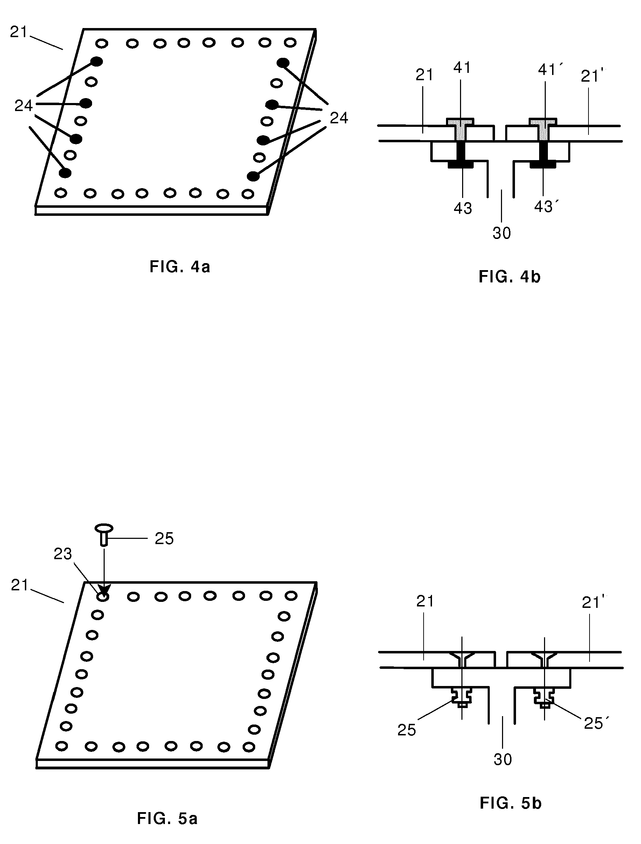

In the embodiment of the invention illustrated in Figures 4a-5b, the union of non-structural panels 21, 21' to a supporting member 30 is performed in two steps.

In a first step (see Figs. 4a, 4b) only permanent magnets 41, 41' and cooperating ferromagnetic parts 43, 43', configured as removable plug-type connectors, are used in a subset 24 of holes 23 allowing a temporary assembly of non-structural panels 21, 21' with the supporting member 30.

In a second step (see Figs, 5a, 5b) the permanent magnets 41, 41' and the cooperating ferromagnetic parts 43, 43' are removed and only bolts 25, 25' are installed in all holes 23 as attachment means of the non-structural panels 21, 21' to the supporting member 30.

The contribution of the mechanical and the magnetic attachment means in a union arrangement according to this invention will depend basically of the type of panel and its position in the aircraft surface.

The magnetic attachment means perform two basic functions:
- Enabling self-clamping of the non-structural panels 21, 21' to the supporting member 30 during the union operation, which is especially useful for the case of panels located on the bottom of the aircraft surface;
- Providing an attachment means acting both in a perpendicular direction and a tangent direction to the non-structural panels 21, 21' in a similar way to a bonded union.

These functions allow therefore facilitating the operation of joining the non-structural panels 21, 21' to the aircraft resistant structure and reducing the number of mechanical fasteners which is particularly advantageous in the case of removable panels.

Preferably the permanent magnets 31, 31'; 41, 41' are made of neodymium.

The invention is particularly applicable to removable access panels to the aircraft inside and panels belonging to aircraft fairings and, particularly, to the belly fairing.

Logically the magnetic union arrangement of the invention only applies when the non-structural panels 21, 21' are electro-magnetic compatible with any close aircraft equipment.

Although the present invention has been described in connection with various embodiments, it will be appreciated from the specification that various combinations of elements, variations or improvements therein may be made, and are within the scope of the invention as defined by the appended claims.

## Claims

1. Union arrangement between a non-structural panel (21) of the outer surface of an aircraft and a supporting member (30) belonging to the aircraft resistant structure, **characterised in that**:
- the attachment means between the non-structural panel (21) and the supporting member (30) comprise mechanical and magnetic attachment means;
- the magnetic attachment means comprise permanent magnets (31; 41) arranged whether in the non-structural panel (21) or in the supporting member (30) and cooperating means (33, 43) with them arranged in, respectively, the supporting member (30) or the non-structural panel (21).

2. Union arrangement according to claim 1, wherein the mechanical attachment means are bolts (25) installed in holes (23) made in the non-structural panel (21) and in the supporting member (30).

3. Union arrangement according to any of claims 1-2, wherein said permanent magnets (31, 41) are made of neodymium.

4. Union arrangement according to any of claims 1-3, wherein the magnetic attachment means are configured to allow by themselves alone the self-clamping of the non-structural panel (21) to the supporting member (30) thereby facilitating the installation of the mechanical attachment means.

5. Union arrangement according to any of claims 1-4, wherein the permanent magnets (31) are configured as bodies embedded in the non-structural panel (21) or in the supporting member (30) with a face aligned with its surface in contact with, respectively, the supporting member (30) or the non-structural panel (21).

6. Union arrangement according to claim 5, wherein the permanent magnets (31) are embedded in a non-structural panel (21) made of composite and the cooperating means is the supporting member (30) itself made of a suitable metallic material.

7. Union arrangement according to claim 5, wherein the permanent magnets (31) are embedded in a non-structural panel (21) made of composite and the cooperating means (33) are parts made of a ferromagnetic material arranged in the supporting member (30).

8. Union arrangement according to any of claims 1-4, wherein the permanent magnets (41) and the cooperating means (43) with them are configured as removable plug-type connectors that can be installed in the holes (23) made in the non-structural panel (21) and in the supporting member (30).

9. Method of making a union arrangement between a non-structural panel (21) of the outer surface of an aircraft and a supporting member (30) belonging to the aircraft resistant structure, comprising the following steps:
- making a union arrangement according to claim 8 in a subset (24) of the holes (23) made in the non-structural panel (21) and in the supporting member (30);
- making a union arrangement with mechanical means in all holes (23) after removing the permanent magnets (41) and the cooperating members (43) installed in the previous step.

10. Aircraft comprising a union arrangement between a non-structural panel (21) of its outer surface and a supporting member (30) belonging to the aircraft resistant structure according to any of claims 1-8.

11. Aircraft according to claim 10, wherein the non-structural panel (21) is a removable access panel to the aircraft inside.

12. Aircraft according to claim 10, wherein the non-structural panel (21) is a panel belonging to an aircraft fairing.

13. Aircraft according to claim 12, wherein said aircraft fairing is the belly fairing.
